# EUROPEAN PATENT SPECIFICATION

(11) **EP 2 172 041 B1**
(45) Date of publication and mention of the grant of the patent: **13.10.2010**
(21) Application number: 07786809.9
(22) Date of filing: 22.06.2007
(51) Int. Cl.: H04W 60/02

(54) **PERIODIC LOCATION UPDATE HANDLING**
UMGANG MIT PERIODISCHEN ORTSAKTUALISIERUNGEN
TRAITEMENT DE MISE À JOUR DE LOCALISATION PÉRIODIQUE

(43) Date of publication of application: 07.04.2010
(73) Proprietor: Telefonaktiebolaget LM Ericsson (publ), 164 83 Stockholm (SE)
(72) Inventor: PEHRSSON, Arne, S-141 71 Huddinge (SE); HALLENSTÅL, Magnus, S-187 50 Täby (SE); RUNE, Göran, S-582 52 Linköping (SE); VIKBERG, Jari Tapio, S-153 38 Järna (SE); WITZEL, Andreas, 52134 Herzogenrath (DE)
(74) Representative: Talbot-Ponsonby, Daniel Frederick
(86) International application number: PCT/EP2007/056273
(87) International publication number: WO 2009/000316

(56) References cited:
- EP-A- 1 758 425
- WO-A-99/16268
- WO-A-2007/039757
- US-A1- 2004 128 345
- US-B1- 6 389 008
- NOKIA: "Mobility Management in LTE_IDLE state" 3GPP TSG-RAN WG3#50, [Online] 9 January 2006 (2006-01-09), - 13 January 2006 (2006-01-13) pages 1-8, XP002480075 Sophia Antipolis, France Retrieved from the Internet: URL:http://www.3gpp.org/ftp/tsg_ran/WG3_Iu /TSGR3_50/docs/> [retrieved on 2008-05-13]

## Description

### Technical Field

The invention relates to the handling of periodic location updates at a Mobile Switching Centre Server (MSC-S) in a Circuit Switched (CS) core network (CN) for a terminal attached to a Packet Switched (PS) cell of a radio access network and using the PS cell to access the CS services provided by the CS CN. In particular, though not exclusively, the invention relates to the provision of periodic location updates when the terminals is attached to an LTE radio access network.

### Background

Mobile Circuit Switched (CS) services based on Global System for Mobile Communications (GSM) and Wideband Code Division Multiple Access (WCDMA) radio access are used world-wide. They allow a user to obtain telecommunication services with a single user subscription in most countries of the world. The number of CS subscribers is growing rapidly, boosted by the roll-out of mobile CS services in countries with high populations such as India and China. One reason the number of subscribers is still growing rapidly is the evolution of the Mobile Services Switching Centre (MSC) architecture into a softswitch solution. In the softswitch solution case the traditional MSC/Visitor Location Register (VLR) is divided into a MSC server (MSC-S) and a Media Gateway (MGW). The present invention applies at least both to traditional MSC/VLR scenarios and to divided MSC-S and MGW scenarios.

A 3GPP work item, "Evolved UTRA and UTRAN", defines a Long-Temi Evolution (LTE), designed to improve efficiency, lower costs and improve services for 3GPP-based access technology. LTE will use Orthogonal Frequency-Division Multiplexing (OFDM) radio technology in the downlink and Single Carrier Frequency Division Multiple Access (SC-FDMA) for the uplink, allowing at least 100 Mbps peak data rate for downlink data rate and 50 Mbps for uplink data rate. LTE radio can operate in different frequency bands and is therefore very flexible for deployment in different regions of the world, where different frequency bands might be licensed.

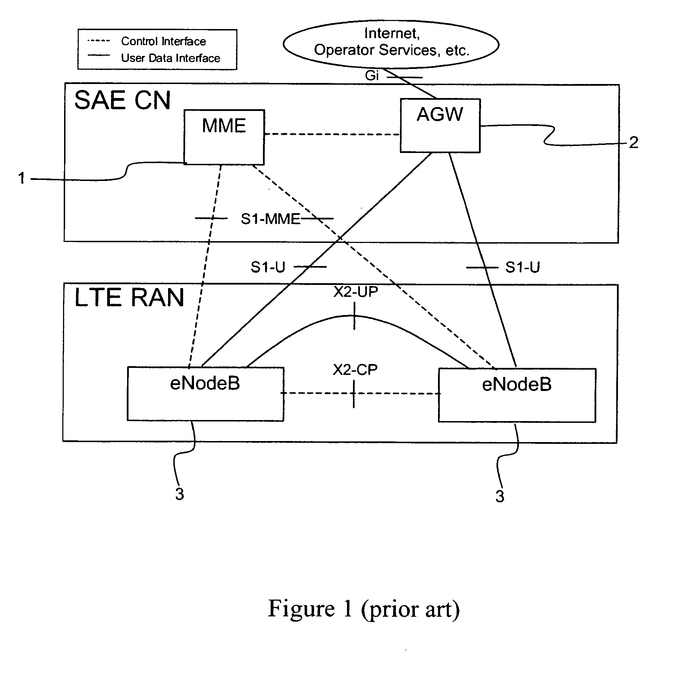

In addition to the Radio Access Network (RAN) standardization, a 3GPP System Architecture Evolution (SAE) work item is being to develop an evolved core network for LTE radio access networks. This new core network is now also called Evolved Packet Core (EPC) as part of the SAE work. The nodes and interfaces of the SAE core network and LTE radio access network are illustrated schematically in Figure 1. The SAE core network (SAE CN) is made up of core nodes, which may be further split into Control Plane (Mobility Management Entity, MME) nodes 1 and User Plane Gateway (Serving Gateway and PDN Gateway) nodes 2. In this application, the term Access Gateway (AGW) is used to depict both the Serving Gateway and the PDN Gateway nodes and functions. In the terminology currently used, AGW contains both User Plane Entity (UPE) and Inter-Access Anchor (IASA) functionality. The MME 1 is connected to an E-UTRAN Node B (eNodeB) 3 via a S1-MME interface, and the AGW 2 (i.e. the Serving Gateway) is connected to an eNodeB 3 via an S1-U interface.

Common to both LTE and SAE is that only a Packet Switched (PS) domain will be specified, i.e. all services are to be supported via this domain. To date, LTE/SAE can be considered to be service "agnostic". It does not care about the nature of the data. It has been assumed that services will be facilitated by a service layer network, and in particular by the IP Multimedia Subsystem (IMS). The service layer would be connected to the AGW within the SAE, via the standard Gi interface which is also called as a SGi interface in the SAE terminology and which is shown in Figure 1.

It appears however that the assumption referred to in the preceding paragraph is not necessarily valid, due to the fact that some LTE/SAE network operators may not wish to implement an IMS network at all or simultaneously with LTE/SAE deployment. In this case, it becomes imperative that the SAE is able to sustain or provide access to at least certain services in the CS services domain, normally available over GSM and WCDMA accesses, and in particular the traditional CS type services such as voice calls.

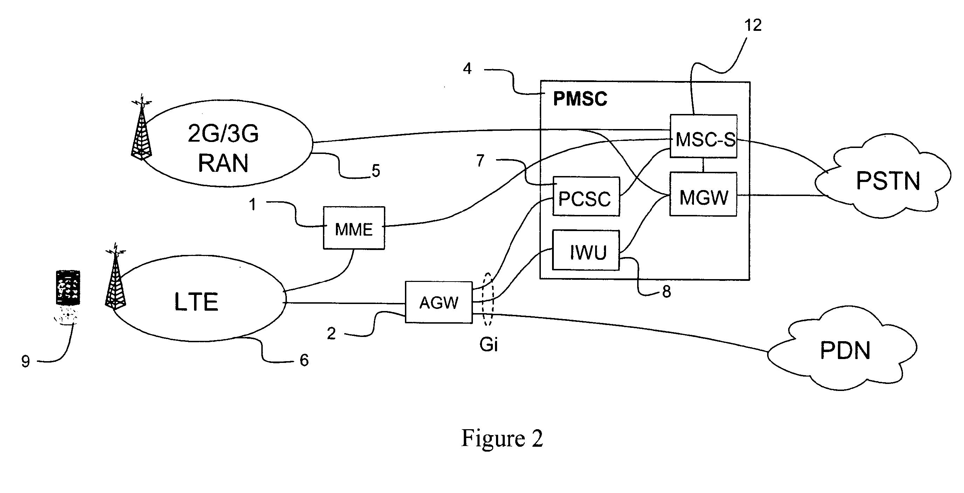

Solutions which allow access to the CS services domain over LTE/SAE are referred to as "CS over LTE/SAE", or briefly just "CS over LTE" (CSoLTE) solutions. The basic architecture for these solutions is illustrated schematically in Figure 2.

The Packet MSC (PMSC) 4 may serve both traditional GSM/LTMTS RANs 5 and the new CS over LTE based solutions 6. The PMSC 4 contains two logical functions referred to as a Packet CS Controller (PCSC) 7 and an Interworking Unit (IWU) 8. The communication between a terminal 9 and the PMSC 4 is conducted over the (S)Gi interface. This means that all direct communication between the terminal and the PCSC 7 and the IWU 8 in the PMSC 4 is based on IP (Internet Protocol) based protocols. The terminal is visible to the PMSC and reachable using an IP-address via an Access Gateway (AGW) 2. This communication is via two different interfaces, U8c for the control plane and U8u for the user plane. The U8c interface is between the terminal 9 and the PCSC 7 and the U8u interface is between the terminal 9 and the IWU 8. The PCSC 7 has also an Rx interface to the Policy Control and Charging Rules Function (PCRF) for allocation of LTE/SAE bearers for the CSoLTE services.

There are a number of possible alternatives for the actual provision of CS services using the PMSC. A first alternative is called "CS Fallback". In CS Fallback, the terminal performs SAE Mobility Management (MM) procedures towards a SAE Mobility Management Entity (MME) 1 while using LTE access. The MME 1 registers the terminal in a MSC-S 12 for CS based services. When a mobile terminating call or other transaction request resulting in a page for CS services is received in the MSC-S 12 it is forwarded to the terminal via the MME 1, and the terminal performs fallback to a GSM/UMTS RAN 5 and responds to the CS Paging Request. This means that the terminal selects a cell in the GSM RAN (GERAN) or in the UMTS RAN (UTRAN) based on information received e.g. as part of the SAE MM procedures. A similar process is used for Mobile originated CS services, and when these are triggered and the terminal is using LTE access, it will fall back to a GSM or UMTS RAN and invoke the CS service there.

A second alternative is referred to as "CS over LTE Integrated" (CSoLTE-I). In this solution the same SAE MM procedures as for "CS Fallback" are used, but instead of performing fallback to a 2G or 3G RAN, the terminal invokes all the CS services over the LTE radio access network. CS services (also called Connection Management, CM, procedures) are transported over IP-based protocols between a PMSC 4 and the terminal 9 using the LTE radio access network and SAE CN nodes such as the AGW 2.

A third solution is referred to as "CS over LTE Decoupled" (CSoLTE-D). In this solution both MM and CM procedures are transported using IP-based protocols directly between the PMSC 4 and the terminal using the LTE radio access network and SAE CN user plane nodes such as the AGW 2. The terminal needs to initially perform a specific registration or attachment procedure to the PMSC 4 (or more precisely to the PCSC 7) using the U8c interface signalling. This is needed mainly to inform the network that the terminal is connected to the PCSC, and is then also needed for handling of terminating calls and other transactions. As part of the initial registration between the terminal and the PCSC, there is also a need to perform an initial Location Area Update (LAU) procedure towards the MSC-S.

The initial LAU procedure could be performed in the same way as in GSM/WCDMA networks (*i.e*. from the terminal) or could be triggered from the PCSC 7 when the terminal performs the initial registration/attachment to the PCSC. All CS paging procedures are triggered from the MSC-S 12 to the PCSC 7 and then further to the terminal 9. This means that the PCSC 7 needs to have a way to communicate with the terminal to forward the CS paging indications to the terminal, and the initial registration is used to fulfil this purpose. The terminal 9 informs the PCSC 7 about its IP-address (in the AGW) and provides necessary additional addressing information (*e.g*. UDP or TCP port).

In addition, some form of "keep alive" or "heartbeat" mechanism is needed between the terminal and the PCSC, to let the PCSC know that the terminal is still attached to the PCSC. Once the keep alive or heartbeat signalling is not received in the PCSC, the PCSC can remove all information about the terminal.

In GSM/WCDMA networks, each terminal is required to provide periodic LAUs to indicate to the CS domain part of the core network that the terminal is still reachable. In this case the periodicity of these periodic LAUs, *i.e.* the relevant timer value, is indicated to the terminal as part of the system information broadcast in each cell. If periodic LAUs are not received at the MSC/ VLR, then the VLR may decide to detach the terminal from the network. When this happens, the terminal becomes unreachable for terminating transactions. Furthermore, it cannot perform originating transactions until it is again attached to the MSC/VLR. Similar procedures apply also towards the PS domain part of the GSM/WCDMA core networks. In this case the procedure is called Routing Area Update (RAU) and the CN node is called Serving GPRS Support Node (SGSN). The minor difference is that the timer indicating the periodicity of RAUs is communicated from the SGSN to the terminal using normal unicast signalling (*i.e*. this timer is not part of the broadcast system information).

As previously discussed, it is possible to provide CS services from a Mobile Switching Centre Server (MSC-S) in a Circuit Switched (CS) core network (CN) for a terminal attached to a Packet Switched (PS) cell of a radio access network and using the PS cell to access the CS services provided by the CS CN. Different MM procedures, *e.g*. LAUs or TAUs, are triggered based on the terminal moving in the radio access network. The most obvious procedures that apply for the CSoLTE-D solution are the TAU procedures performed between the terminal and the MME 1, the registration and "heartbeat/keep alive" procedures between the terminal and the PCSC 7 and the LAU procedures towards the MSC-C 12 part of the PMSC 4.

One simple solution would be to perform all the different MM procedures independently of each other and without any coordination or optimization. In this case, there would be a large amount of different MM related signalling between the terminal and the different parts of the network. This would mean that the battery lifetime of the terminal would decrease. It would also mean that the network would be loaded with a large amount of signalling, thus possibly decreasing the capacity of the network to handle other transactions such as normal calls or PS sessions.

It is therefore an object of the present invention to provide an improved way of handling procedures for keeping the LAU-procedure related information in the MSC-S 12 updated in an optimal way. It is a further object to provide a system in which the MSC-S 12 part does not need to be modified, and existing MSC-S 12 functionality can be reused.

US6389008 B1 describes an integrated telecommunications network which integrates an ANSI-41 circuit switched network and a General Packet Radio Service packet data network, where combined Routing Area and Location Area updates are performed and, to support circuit switched services in GPRS network, the GPRS switching node, SGSN, in the packet switched core network, informs the MSC/VLR in the ANSI-41 circuit switched network of any location update initiated by a mobile station registered in both networks.

WO2007/039757 A2 describes a telecommunications system including a first radio access technology and second radio access technology.

### Summary

In accordance with a first aspect of the present invention there is provided a method for periodically indicating to a MSC/VLR in a CS core network that a terminal is attached to CS services in the CS core network *via* a PS cell of a LTE radio access network. At a PCSC in the CS core network, LAUs are periodically initiated and sent to the MSC/VLR for as long as the terminal is attached to or registered with the PCSC.

The PCSC may know that access to the terminal is available because the terminal is registered with the PCSC and performs the needed keep alive/heartbeat procedures, in which case the PCSC sends periodic LAUs to the MSC-S for as long as the terminal is registered with the PCSC.

The terminal may be configured to send periodic Tracking Area Updates (TAUs) to a Mobility Management Entity (MME), in which case a LAU is preferably sent from the terminal to the PCSC every time a Tracking Area Update is sent to the MME. The main benefit with this coordination is that the terminal needs to enter active state only as decided by the interval of the TAU procedure, and so the battery lifetime of the terminal, can be increased. The PCSC will then know that access to the terminal is available for as long as it is receiving LAUs from the terminal. It does not need to send a LAU to the MCS-S every time it receives a LAU from the terminal: it may run its own clock/timer and perform the LAUs on behalf of the terminal, although in one embodiment it may react to the LAU from the terminal by sending a LAU to the MSC-S.

In one embodiment a Mobility Management (MM) Procedure requiring involvement by the terminal may be initiated by the MSC-S or MSC/VLR. If this is the case a message relating to the MM procedure may be sent from the PCSC to the terminal. A response from the terminal may then be forwarded from the PCSC back to the MSC-S. When the MM procedure is first initiated the PCSC may instruct the terminal to send an immediate LAU, All the procedures related to the LAU between the terminal and the MSC-S may then be relayed by the PCSC.

In an alternative embodiment, when the MM procedure is initiated by the MSC-S or MSC/VLR, the signalling connection between the PCSC and the MSC-S pr MSC/VLR may be disconnected. The PCSC may then ensure that any subsequent LAUs sent by the terminal are forwarded to the MSC-S or MSCNLR.

The terminal may be configured to send Location Area Updates (LAUs) in addition to TAUs, although these may be transmitted with different periodicities. If this is the case, both the LAUs and the TAUs are preferably sent from the terminal to the PSCS (and to the MME) with whichever time interval is shorter out of the LAU time interval and TAU time interval.

The terminal may be also configured to send a heartbeat message in addition to both LAUs and TAUs, and all these three procedures may be transmitted with different periodicities. If this is the case, then all these procedures are preferably performed together by the terminal with whichever time interval is shorter out of the three different time intervals

The radio access network may be associated with a SAE core network. The CS core network providing CS services for terminals camped on LTE cells may be a GSM CS core network or UMTS CS core network including the additions related to CSoLTE solutions as described in this application, for example.

In accordance with another aspect of the present invention there is provided a PCSC for use in a UMTS CS core network. The PCSC comprises confirmation means for confirming that a terminal in a LTE radio access network and a cell is still attached to or registered with the PCSC. The PCSC further comprises periodic LAU means for initiating and sending periodic LAUs to a MSC-S in the CS core network for as long as the terminal is attached to or registered with the PCSC so as to indicate to the MSC that the terminal is attached to CS services in the CS core network.

### Brief Description of the Drawings

Figure 1 illustrates schematically the nodes and interfaces of the SAE core network and LTE radio access network;
Figure 2 illustrates schematically CS over LTE architecture;
Figure 3 illustrates schematically in CS over LTE architecture with a roaming terminal providing Location Area Updates via the Gs+ interface;
Figure 4 illustrates schematically CS over LTE control plane protocol architecture for the Gs+ interface;
Figure 5 illustrates schematically CS over LTE user plane protocol architecture with a roaming terminal providing Location Area Updates via the Gi-U8c interface;
Figure 6 illustrates schematically CS over LTE control plane protocol architecture for the U8c interface;
Figure 7 is a flow diagram illustrating how periodic location updates are sent to the MSC-S; and
Figure 8 illustrates schematically a PCSC for use in a core network according to an embodiment of the invention.

### Detailed Description

The first two alternatives described above for providing CS services using the P-MSC ("CS Fallback" and ``CSoLTE-I") are based on the use of the Gs+ interface between the MME and the MSC-S for Mobility Management procedures. This means that location updates to the MSC-S are based on user mobility in the LTE/SAE, for which 3GPP currently provides no solution. However, it is clear that LTE/SAE mobility will be based on a geographical structure called a tracking area (TA). Two possible concept have been raised in 3GPP: one is that these TAs may overlap; the other is that the terminal may be present in several TAs.

As previously discussed, in GSM/UMTS, each terminal is required to provide periodic location updates to indicate to the network that the terminal is still reachable. If periodic location updates are not received at the MSC/VLR, then the VLR may decide to detach the terminals from the network. When this happens, the terminal becomes unreachable for terminating transactions. Furthermore, it cannot perform originating transactions until it is again attached to the MSC/VLR.

When connected to an LTE radio access network, the terminal may initiate a periodic Tracking Area Update (TAU) when the related timer has expired. Whether the periodic TAUs will be supported in LTE is not yet settled in 3GPP.

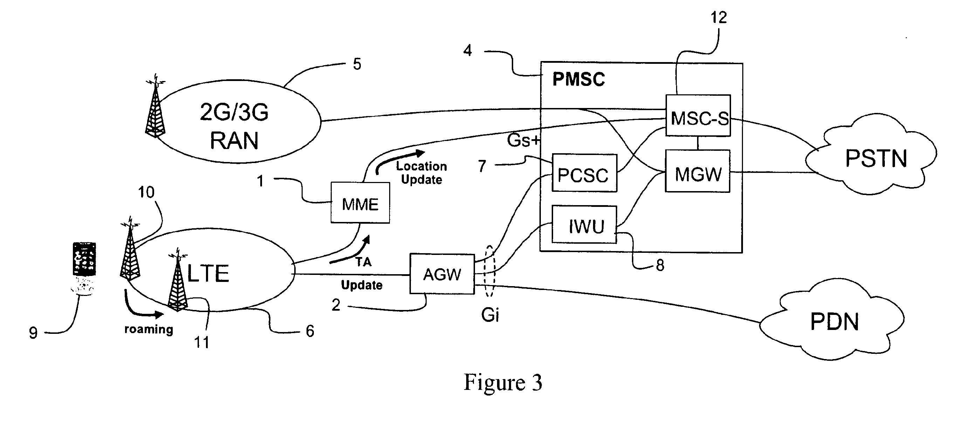

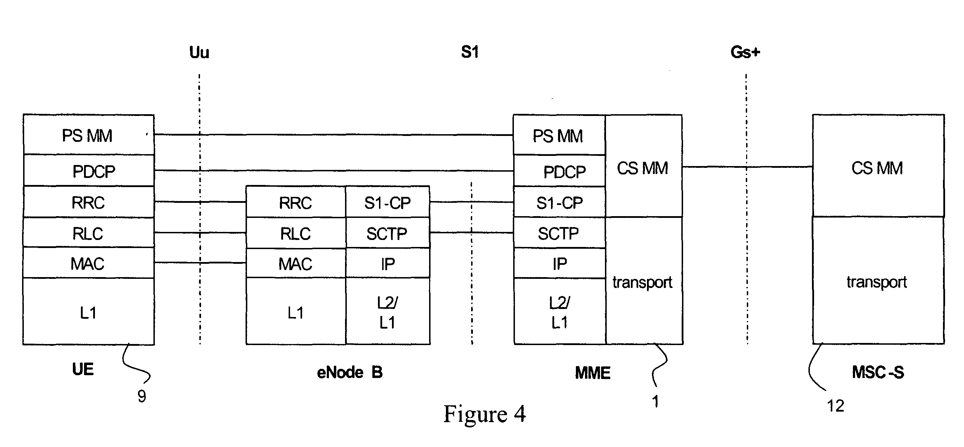

Regardless of which concept is finally chosen, when roaming within the LTE radio access area, the terminal 9 will report its mobility to the MME I as shown in Figure 3, which illustrates a terminal 9 which moves between base stations 10, 11 in an LTE radio access network. As the terminal moves between TAs, periodic Location Area Updates (LAUs) are sent to the MSC-S 12 by the MME 1 over the Gs+ interface. A suitable mobility management protocol architecture for the Gs+-interface is shown in Figure 4.

If periodic TAU is not supported in the LTE 6, the MME 1 runs a timer which periodically initiates a LAU to the PMSC 4 over the Gs+ interface. For as long as contact is maintained between the terminal 9 and MME 1, the MME will continue to send LAUs to the MSC-S. When the PMSC subscribes to mobility events in the MME, the PMSC also indicates whether periodic mobility information is required.

If periodic TAU is supported in LTE, this is mapped to periodic LAU in the MME. It will be appreciated that there is a possibility that the time interval for periodic TAU (in the LTE 6) and LAU (in the MME 1) is not the same. The mapping ensures that the MME 1 can implement both timer and TAU based periodic LAUs. One way of implementing this is to ensure that the timer in the MME 1 for periodic LAUs is kept active for as long as the periodic (or other) TAUs are received by the MME.

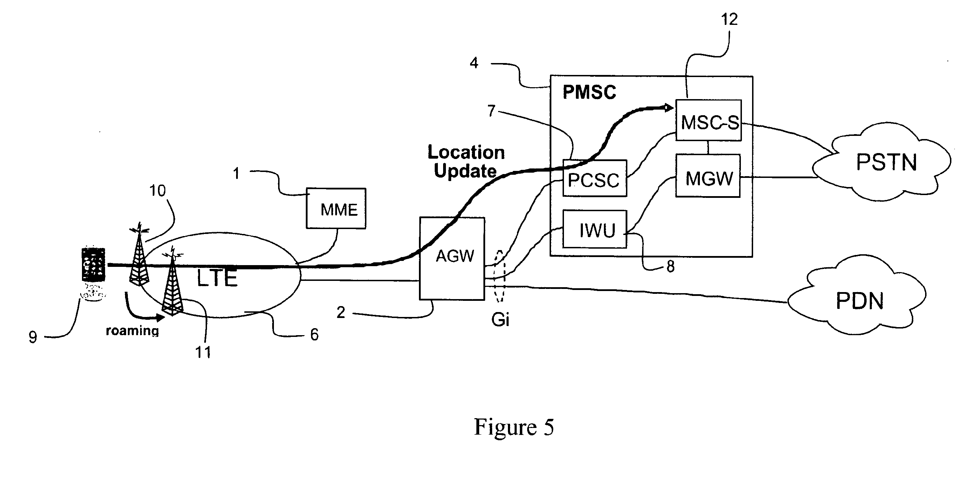

The third alternative described above ("CSoLTE-D") is not based on the usage of the Gs+ interface for CS mobility management. Instead, CS mobility management relies on the terminal 9 performing separate Location Area Update (LAU) signalling towards the PMSC 4 using the (S)Gi-based U8c-interface, as shown in Figure 5. As with the arrangement shown in Figure 3, periodic TAUs may be performed by the terminal 9, providing tracking area information to the MME 1. However, the MME does not provide the necessary information to the PMSC 4 as the Gs+ interface is not used in this alternative solution.

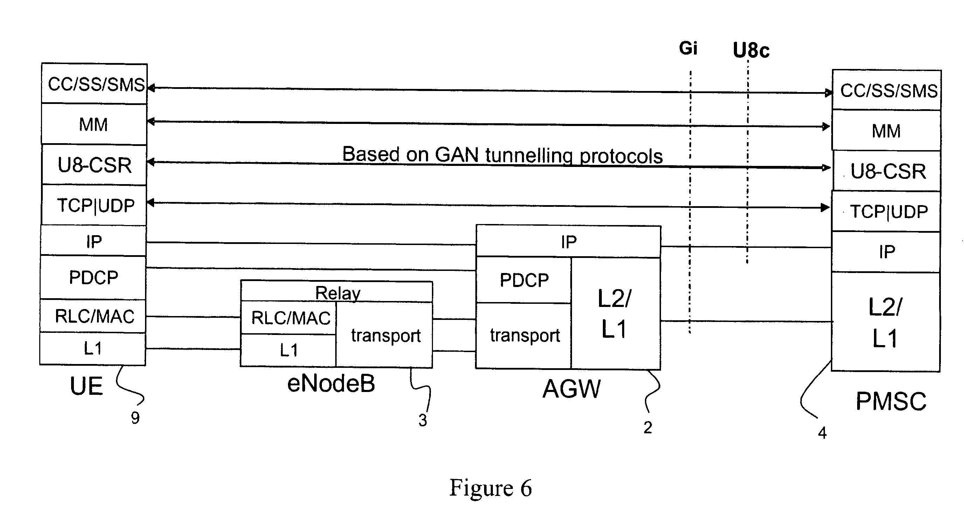

A suitable mobility management (MM) protocol architecture between the terminal 9 and the PMSC 4 for the CSoLTE-D solution is shown in Figure 6. The MM protocol architecture is based on the CSoLTE control plane protocol architecture between the terminal 9 and the PMSC 4 (i.e. the U8c interface). Interposed between the two are the eNodeB 3 and the AGW 2. This architecture is based on IP protocols (IP, TCP, UDP) and an additional tunnelling protocol named as U8-Circuit Switched Resources (U8-CSR). The U8-CSR may be based on Generic Access Network (GAN) tunnelling protocols as defined in 3GPP TS 43.318 and 44.318. The U8-CSR protocol carries the Mobility Management (MM) and all the protocol layers above MM transparently between the terminal 9 and the PMSC 4.

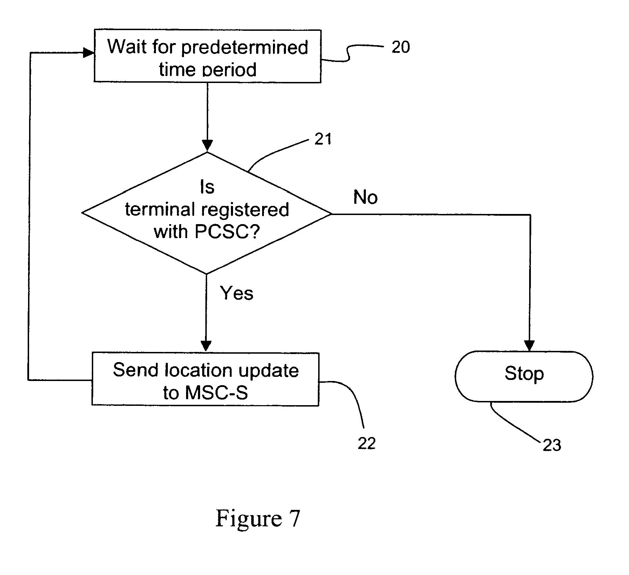

If periodic TAU is not supported in LTE, the PCSC 7 makes use of the fact that the terminal 9 is registered with it and is performing the keep alive/heartbeat signalling related to the registration to the PCSC 7. As shown in Figure 7, the PCSC 7 runs a timer 20 which periodically initiates LAU 22 to the MSC-S 12. These periodic LAUs are performed for as long 21 as the terminal 9 is registered to the PCSC 7. In other words, the PCSC 7 perform periodic LAUs on behalf of the terminal 9. If the registration 23 of the terminal 9 with the PCSC 7 is terminated, the PCSC ceases sending LAUs to the MSC-S 12.

If periodic TAU is supported in LTE, then in one embodiment it is defined that the terminal 9 must send periodic LAUs to the PCSC 7 each time periodic TAUs are sent to the MME 1. The PCSC 7 then sends periodic LAUs to the MSC-S 12. The PCSC 7 may also run its own timer for periodic LAUs, and it may be that the time intervals for periodic TAU (by the terminal 9) and LAUs (by the PCSC) are not the same. In this case, the timer at the PCSC 7 for periodic LAUs to the MSC-S 12 should be kept active for as long as periodic LAUs or registration heartbeat/keep alive messages are being received from the terminal 9. In other words, whenever the timer expires in the PCSC 7, then (as long as LAUs are still being received from the terminal 9) it initiates a periodic LAU towards the MSC-S 12.

In another embodiment- applicable if periodic TAU (or similar) is performed in LTE/SAE -the terminal 9 runs its own LAU timer, separated from the TAU periodic timer. If the TAU and LAU timers are different, the terminal 9 will use the shorter time period of the two, and carry out TAU and LAU at the same instance in time. This reduces the overall time for which that the terminal needs to enter an active state, thus increasing the battery lifetime of the terminal.

In further embodiment the terminal 9 runs its own LAU, TAU and registration keep alive/heartbeat timers. If these timer values are different, the terminal 9 will use the shortest time period of the three timers, and carry out registration keep alive/heartbeat, TAU and LAU at the same instance in time (i.e. once the used timer is triggered).

An initial or periodic LAU (or really any type of LAU) may trigger the MSC-S to initiate some MM procedures that require involvement with the terminal. These procedures are defined in the 3GPP TS 24.008 (e.g. v6.15.0) and may, for example, contain Authentication, Identification or TMSI reallocation procedures. In a similar way, the terminal needs to be informed if the MSC-S rejects a LAU. This means that special handling is needed for the cases when the PCSC is sending, for example, periodic LAUs on behalf of the terminal and the MSC-S triggers any of the MM procedures that need involvement from the terminal.

Two examples of such special handling are as follows:
In one example, the PCSC should indicate (with new signalling specific for this purpose) to the terminal that it needs to perform a LAU right now (*i.e*. when the MSC-S triggers the authentication procedure). Once the PCSC receives the first message related to LAU from the terminal, it will not forward it to the MSC-S and instead it will forward the messages sent from the MSC-S needing involvement from the terminal to the terminal. This means that the PCSC ensures that the terminal and the MSC-S become synchronized as part of the LAU initially triggered from the PCSC. Once the terminal replies, the PCSC may forward the needed responses towards the MSC-S.

Alternatively, the PCSC disconnects the signalling connection towards the MSC-S and makes sure that the terminal performs a LAU, either by explicitly ordering it to do so via a new procedure or by waiting for it to perform a periodic LAU. This procedure needs to be performed all the way to the MSC-S.

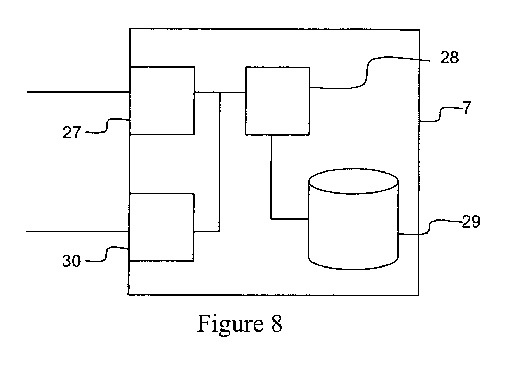

Referring to Figure 8, there is illustrated a PCSC 7 for use in a core network. The PCSC 7 is provided with a receiver 27 for receiving messages from the terminal 9, and a processor 28 for conforming that the terminal is still registered and/or still sending periodic LAUs or registration heartbeat/keep alive messages. A memory 29 may also be provided, and a transmitter 30 is provided to send periodic LAUs to the MSC-S 12.

Thus the invention has the advantage that the existing mechanisms for terminal detachment can be kept in the MSC-S (and/or in a traditional MSC/VLR). Since LAUs are received from the PCSC there is no requirement to change any mechanisms in the MSC-S. The installed MSS infrastructure can thus be reused. There is also no need to co-ordinate periodic timers in MSC and LTE.

It will be appreciated by the person of skill in the art that various modifications may be made to the above described embodiments without departing from the scope of the present invention as defined in the appended claims.

## Claims

1. A method for periodically indicating to a Mobile Switching Centre / Visitor Location Register (12) in a Circuit Switched core network that a terminal (9) is attached to Circuit Switched services in the Circuit Switched core network *via* a Packet Switched cell of a Long-Term Evolution radio access network (5,6), the method comprising:
at a Packet Circuit Switched Controller (7) in the Circuit Switched core network, periodically initiating and sending Location Area Updates to the Mobile Switching Centre / Visitor Location Register for as long as the terminal is attached to or registered with the Packet Circuit Switched Controller.

2. The method of claim 1, wherein the Mobile Switching Centre / Visitor Location Register comprises a Mobile Switching Centre Server and a Media Gateway, and wherein the periodic Location Area Updates are sent from the Packet Circuit Switched Controller to the Mobile Switching Centre Server.

3. The method of claim 1 or 2, wherein the terminal is registered with the Packet Circuit Switched Controller, and wherein the periodic Location Area Updates are sent from the Packet Circuit Switched Controller to the Mobile Switching Centre / Visitor Location Register for as long as the terminal is registered with the Packet Circuit Switched Controller.

4. The method of claim 3, wherein the terminal sends heartbeat messages towards the Packet Circuit Switched Controller to maintain the registration therewith.

5. The method of claim 4, wherein the Packet Switched Controller sends periodic Location Area Updates to the Mobile Switching Centre / Visitor Location Register for as long as heartbeat messages are received from the terminal.

6. The method of any preceding claim, wherein the terminal is configured to send periodic Tracking Area Updates to a Mobility Management Entity (1), the method further comprising sending a Location Area update from the terminal to the Packet Circuit Switched Controller every time a Tracking Area Update is sent to the Mobility Management Entity.

7. The method of claim 6, wherein a Location Area Update is sent from the Packet Circuit Switched Controller to the Mobile Switching Centre / Visitor Location Register every time a Location Area Update is received from the terminal.

8. The method of claim 6 or 7, wherein the terminal is configured to send periodic Tracking Area Updates to a Mobility Management Entity at first time intervals and periodic Location Area Updates to the Packet Circuit Switched Controller, at second time intervals, the method further comprising sending periodic Location Area updates from the terminal to the Packet Circuit Switched Controller and periodic Tracking Area Updates to the Mobility Management Entity at whichever is shorter of the first or second time intervals.

9. The method of claim 8, wherein the terminal is further configured to send heartbeat messages towards the Packet Circuit Switched Controller to maintain the registration therewith at third time intervals, and wherein the Location Area updates from the terminal to the Packet Circuit Switched Controller, the Tracking Area Updates to the Mobility Management Entity and the heartbeat messages are sent at whichever is shortest of the first, second or third time intervals

10. The method of any preceding claim, further comprising:
initiating, at the Mobile Switching Centre/ Visitor Location Register, a Mobility Management Procedure requiring involvement by the terminal; and
sending a message relating to the Mobility Management Procedure from the Packet Circuit Switched Controller to the terminal.

11. The method of claim 10, further comprising sending a response relating to the Mobility Management Procedure from the terminal to the Packet Circuit Switched Controller.

12. The method of claim 11, further comprising forwarding the response from the Packet Circuit Switched Controller to the Mobile Switching Centre / Visitor Location Register.

13. The method of claim 10, 11 or 12, further comprising, when the Mobility Management Procedure is initiated, sending an instruction from the Packet Circuit Switched Controller to the terminal to send a Location Area Update to the Packet Circuit Switched Controller.

14. The method of any of claims 1 to 9, further comprising:
initiating, at the Mobile Switching Centre / Visitor Location Register, a Mobility Management Procedure requiring involvement by the terminal;
disconnecting a signalling connection between the Packet Circuit Switched Controller and the Mobile Switching Centre / Visitor Location Register; and
ensuring that any subsequent Location Area Updates sent from the terminal to the Packet Circuit Switched Controller are forwarded to the Mobile Switching Centre / Visitor Location Register.

15. The method of any preceding claim, wherein the Circuit Switched core network providing Circuit Switched services to terminals camped on a Packet Switched cell of an radio access network is a Global System for Mobile Communications Circuit Switched core network or Universal Mobile Telecommunications System Circuit Switched core network.

16. A Packet Circuit Switched Controller for use in a Universal Mobile Telecommunications System Circuit Switched Core network, comprising:
confirmation means for confirming that a terminal in a Long Term Evolution radio access network and a cell is still attached to or registered with the Packet Circuit Switched Controller; and
periodic Location Area Update means for initiating and sending periodic Location Area Updates to a Mobile Switching Centre Server in the Circuit Switched Core network for as long as the terminal is attached to or registered with the Packet Circuit Switched Controller so as to indicate to the Mobile Switching Centre that the terminal is attached to Circuit Switched services in the Circuit Switched core network.

## Patentansprüche

1. Verfahren, um einer Mobilfunkvermittlung/einem Besucherstandortregister (12) in einem leitungsvermittelten Kernnetz periodisch anzuzeigen, dass ein Endgerät (9) an leitungsvermittelte Dienste im leitungsvermittelten Kernnetz über eine paketvermittelte Zelle eines LTE(Long-Term Evolution)-Funkzugangsnetzes (5,6) angeschlossen ist, wobei das Verfahren umfasst:
an einem paket- und leitungsvermittelten Controller (7) im leitungsvermittelten Kernnetz periodisches Initiieren und Senden von Standortbereichsaktualisierungen an die Mobilfunkvermittlung/das Besucherstandortregister, solange das Endgerät beim paket- und leitungsvermittelten Controller angeschlossen oder bei ihm registriert ist.

2. Verfahren nach Anspruch 1, worin die Mobilfunkvermittlung/das Besucherstandortregister einen Mobilfunkvermittlungsserver und ein Media-Gateway umfasst und worin die periodischen Standortbereichsaktualisierungen vom paket- und leitungsvermittelten Controller an den Mobilfunkvermittlungsserver gesendet werden.

3. Verfahren nach Anspruch 1 oder 2, worin das Endgerät beim paket- und leitungsvermittelten Controller registriert ist und worin die periodischen Standortbereichsaktualisierungen vom paket- und leitungsvermittelten Controller an die Mobilfunkvermittlung/das Besucherstandortregister gesendet werden, solange das Endgerät beim paket- und leitungsvermittelten Controller registriert ist.

4. Verfahren nach Anspruch 3, worin das Endgerät Heartbeat-Nachrichten an den paket- und leitungsvermittelten Controller sendet, um die Registrierung damit aufrechtzuerhalten.

5. Verfahren nach Anspruch 4, worin der paketvermittelte Controller periodische Standortbereichsaktualisierungen an die Mobilfunkvermittlung/das Besucherstandortregister sendet, solange Heartbeat-Nachrichten vom Endgerät empfangen werden.

6. Verfahren nach einem vorhergehenden Anspruch, worin das Endgerät dazu konfiguriert ist, periodische Trackingbereichsaktualisierungen an eine Mobilitätsverwaltungsinstanz (1) zu senden, wobei das Verfahren außerdem umfasst, eine Standortbereichsaktualisierung vom Endgerät an den paket- und leitungsvermittelten Controller immer dann zu senden, wenn eine Trackingbereichsaktualisierung an die Mobilitätsverwaltungsinstanz gesendet wird.

7. Verfahren nach Anspruch 6 worin eine Standortbereichsaktualisierung vom paket- und leitungsvermittelten Controller an die Mobilfunkvermittlung/das Besucherstandortregister immer dann gesendet wird, wenn eine Standortbereichsaktualisierung vom Endgerät empfangen wird.

8. Verfahren nach Anspruch 6 oder 7, worin das Endgerät dazu konfiguriert ist, periodische Trackingbereichsaktualisierungen an eine Mobilitätsverwaltungsinstanz in ersten Zeitintervallen und periodische Standortbereichsaktualisierungen an den paket- und leitungsvermittelten Controller in zweiten Zeitintervallen zu senden, wobei das Verfahren außerdem umfasst, dass periodische Standortbereichsaktualisierungen vom Endgerät an den paket- und leitungsvermittelten Controller und periodische Trackingbereichsaktualisierungen an die Mobilitätsverwaltungsinstanz im kürzeren der ersten oder zweiten Zeitintervalle gesendet werden.

9. Verfahren nach Anspruch 8, worin das Endgerät außerdem dazu konfiguriert ist, Heartbeat-Nachrichten an den paket- und leitungsvermittelten Controller zu senden, um die Registrierung damit in dritten Zeitintervallen aufrechtzuerhalten, und worin die Standortbereichsaktualisierungen vom Endgerät an den paket- und leitungsvermittelten Controller, die Trackingbereichsaktualisierungen an die Mobilitätsverwaltungsinstanz und die Heartbeat-Nachrichten im kürzesten der ersten, zweiten oder dritten Zeitintervalle gesendet werden.

10. Verfahren nach einem vorhergehenden Anspruch, außerdem umfassend:
an der Mobilfunkvermittlung/dem Besucherstandortregister eine Mobilitätsverwaltungsprozedur initiieren, die Beteiligung durch das Endgerät erfordert; und
eine die Mobilitätsverwaltungsprozedur betreffende Nachricht vom paket- und leitungsvermittelten Controller an das Endgerät senden.

11. Verfahren nach Anspruch 10, außerdem umfassend: das Senden einer die Mobilitätsverwaltungsprozedur betreffenden Antwort vom Endgerät an den paket- und leitungsvermittelten Controller.

12. Verfahren nach Anspruch 11, außerdem umfassend: das Weiterleiten der Antwort vom paket- und leitungsvermittelten Controller an die Mobilfunkvermittlung/das Besucherstandortregister.

13. Verfahren nach Anspruch 10, 11 oder 12, außerdem umfassend: wenn die Mobilitätsverwaltungsprozedur initiiert wird, Senden einer Anweisung vom paket- und leitungsvermittelten Controller an das Endgerät, eine Standortbereichsaktualisierung an den paket- und leitungsvermittelten Controller zu senden.

14. Verfahren nach einem der Ansprüche 1 bis 9, außerdem umfassend:
an der Mobilfunkvermittlung/dem Besucherstandortregister eine Mobilitätsverwaltungsprozedur initiieren, die Beteiligung durch das Endgerät erfordert;
Trennen einer Signalisierungsverbindung zwischen dem paket- und leitungsvermittelten Controller und der Mobilfunkvermittlung/dem Besucherstandortregister; und
Sicherstellen, dass vom Endgerät an den paket- und leitungsvermittelten Controller gesendete nachfolgende Standortbereichsaktualisierungen an die Mobilfunkvermittlung/das Besucherstandortregister weitergeleitet werden.

15. Verfahren nach einem vorhergehenden Anspruch, worin das leitungsgeschaltete Kernnetz, das leitungsvermittelte Dienste an Endgeräte bereitstellt, die auf einer paketgeschalteten Zelle eines Funkzugangsnetzes warten, ein leitungsgeschaltetes Kernnetz eines globalen Mobilkommunikationssystems oder ein leitungsgeschaltetes Kernnetz eines universellen Mobiltelekommunikationssystems ist.

16. Paket- und leitungsvermittelter Controller zur Verwendung in einem leitungsgeschalteten Kernnetz eines universellen Mobiltelekommunikationssystems, umfassend:
Bestätigungsmittel zum Bestätigen, dass ein Endgerät in einem LTE(Long-Term Evolution)-Funkzugangsnetz und einer Zelle noch an den paket- und leitungsvermittelten Controller angeschlossen oder bei ihm registriert ist; und
periodisches Standortbereichs-Aktualisierungsmittel zum Initiieren und Senden von periodischen Standortbereichsaktualisierungen an einen Mobilfunkvermittlungsserver im leitungsvermittelten Kemnetz, solange das Endgerät an den paket- und leitungsvermittelten Controller angeschlossen oder bei ihm registriert ist, um der Mobilfunkvermittlung anzuzeigen, dass das Endgerät an leitungsvermittelte Dienste im leitungsvermittelten Kernnetz angeschlossen ist.

## Revendications

1. Procédé pour indiquer périodiquement à un centre de commutation mobile/registre de localisation des visiteurs (12) dans un réseau de noyau à commutation de circuits qu'un terminal (9) est attaché à des services à commutation de circuits dans le réseau de noyau à commutation de circuits via une cellule à commutation de paquets d'un réseau d'accès radio à évolution à long terme (5, 6), le procédé consistant à :
dans un contrôleur à commutation de paquets et de circuits (7) dans le réseau de noyau à commutation de circuits, lancer et envoyer périodiquement des mises à jour de zone de localisation au centre de commutation mobile/registre de localisation des visiteurs tant que le terminal est attaché au contrôleur à commutation de paquets et de circuits ou enregistré auprès de celui-ci.

2. Procédé selon la revendication 1, dans lequel le centre de commutation mobile/registre de localisation des visiteurs comprend un serveur de centre de commutation mobile et une passerelle multimédia, et dans lequel les mises à jour de zone de localisation périodiques sont envoyées du contrôleur à commutation de paquets et de circuits au serveur de centre de commutation mobile.

3. Procédé selon la revendication 1 ou 2, dans lequel le terminal est enregistré auprès du contrôleur à commutation de circuits, et dans lequel les mises à jour de zone de localisation périodiques sont envoyées du contrôleur à commutation de paquets et de circuits au centre de commutation mobile/registre de localisation des visiteurs tant que le terminal est enregistré auprès du contrôleur à commutation de paquets et de circuits.

4. Procédé selon la revendication 3, dans lequel le terminal envoie des messages de battements de coeur vers le contrôleur à commutation de paquets et de circuits pour maintenir l'enregistrement auprès de celui-ci.

5. Procédé selon la revendication 4, dans lequel le contrôleur à commutation de paquets et de circuits envoie des mises à jour de zone de localisation périodiques au centre de commutation mobile/registre de localisation des visiteurs tant que des messages de battements de coeur sont reçus du terminal.

6. Procédé selon l'une quelconque des revendications précédentes, dans lequel le terminal est configuré pour envoyer des mises à jour de zone de suivi périodiques à une entité de gestion de mobilité (1), le procédé comprenant en outre l'envoi d'une mise à jour de zone de localisation du terminal au contrôleur à commutation de paquets et de circuits à chaque fois qu'une mise à jour de zone de suivi est envoyée à l'entité de gestion de mobilité.

7. Procédé selon la revendication 6, dans lequel une mise à jour de zone de localisation est envoyée du contrôleur à commutation de paquets et de circuits au centre de commutation mobile/registre de localisation des visiteurs à chaque fois qu'une mise à jour de zone de localisation est reçue du terminal.

8. Procédé selon la revendication 6 ou 7, dans lequel le terminal est configuré pour envoyer des mises à jour de zone de suivi périodiques à une entité de gestion de mobilité à des premiers intervalles de temps et des mises à jour de zone de localisation périodiques au contrôleur à commutation de paquets et de circuits à des deuxièmes intervalles de temps, le procédé comprenant en outre l'envoi de mises à jour de zone de localisation périodiques du terminal au contrôleur à commutation de paquets et de circuits et de mises à jour de zone de suivi périodiques à l'entité de gestion de mobilité aux premiers ou aux deuxièmes intervalles de temps, à savoir les plus courts des deux.

9. Procédé selon la revendication 8, dans lequel le terminal est en outre configuré pour envoyer des messages de battements de coeur vers le contrôleur à commutation de paquets et de circuits pour maintenir l'enregistrement auprès de celui-ci à des troisièmes intervalles de temps, et dans lequel les mises à jour de zone de localisation envoyées du terminal au contrôleur à commutation de paquets et de circuits, les mises à jour de zone de suivi envoyées à l'entité de gestion de mobilité et les messages de battements de coeur sont envoyés aux premiers, deuxièmes ou troisièmes intervalles de temps, à savoir les plus courts des trois.

10. Procédé selon l'une quelconque des revendications précédentes, consistant en outre à :
lancer, dans le centre de commutation mobile/registre de localisation des visiteurs, une procédure de gestion de mobilité nécessitant l'implication du terminal ; et
envoyer un message concernant la procédure de gestion de mobilité du contrôleur à commutation de paquets et de circuits au terminal.

11. Procédé selon la revendication 10, comprenant en outre l'envoi d'une réponse concernant la procédure de gestion de mobilité du terminal au contrôleur à commutation de paquets et de circuits.

12. Procédé selon la revendication 11, comprenant en outre l'acheminement de la réponse du contrôleur à commutation de paquets et de circuits vers le centre de commutation mobile/registre de localisation des visiteurs.

13. Procédé selon la revendication 10, 11 ou 12, comprenant en outre, lorsque la procédure de gestion de mobilité est lancée, l'envoi d'une instruction, du contrôleur à commutation de paquets et de circuits au terminal, d'envoyer une mise à jour de zone de localisation au contrôleur à commutation de paquets et de circuits.

14. Procédé selon l'une quelconque des revendications 1 à 9, consistant en outre à :
lancer, dans le centre de commutation mobile/registre de localisation des visiteurs, une procédure de gestion de mobilité nécessitant l'implication du terminal ;
déconnecter une connexion de signalisation entre le contrôleur à commutation de paquets et de circuits et le centre de commutation mobile/registre de localisation des visiteurs ; et
s'assurer que toutes mises à jour de zone de localisation suivantes envoyées du terminal au contrôleur à commutation de paquets et de circuits sont acheminées vers le centre de commutation mobile/registre de localisation des visiteurs.

15. Procédé selon l'une quelconque des revendications précédentes, dans lequel le réseau de noyau à commutation de circuits fournissant des services à commutation de circuits aux terminaux situés dans une cellule à commutation de paquets d'un réseau d'accès radio est un système global pour un réseau de noyau à commutation de circuits de communication mobile ou un réseau de noyau à commutation de circuits de système universel de télécommunication avec les mobiles.

16. Contrôleur à commutation de paquets et de circuits destiné à être utilisé dans un réseau de noyau à commutation de circuits de système universel de télécommunication avec les mobiles, comprenant :
des moyens de confirmation pour confirmer qu'un terminal dans un réseau d'accès radio à évolution à long terme et une cellule est encore attaché au contrôleur à commutation de paquets et de circuits ou enregistré auprès de celui-ci ; et
des moyens de mises à jour de zone de localisation périodiques pour lancer et envoyer des mises à jour de zone de localisation périodiques à un serveur de centre de commutation mobile dans le réseau de noyau à commutation de circuits tant que le terminal est attaché au contrôleur à commutation de paquets et de circuits ou enregistré auprès de celui-ci de manière à indiquer au centre de commutation mobile que le terminal est attaché à des services à commutation de circuits dans le réseau de noyau à commutation de circuits.
